# EUROPEAN PATENT APPLICATION

(11) **EP 3 809 024 A1**
(43) Date of publication of application: **21.04.2021**
(21) Application number: 19819426.8
(22) Date of filing: 29.05.2019
(51) Int. Cl.: F16J 15/3204, F16J 15/3208

(54) **SEALING DEVICE AND SEALING METHOD USING SEALING DEVICE**

(30) Priority: 13.06.2018 JP 2018113178
(71) Applicant: NOK Corporation, Minato-ku Tokyo 105-8585 (JP)
(72) Inventor: MANAKA Yuto, Fukushima-shi, Fukushima 960-1193 (JP)
(74) Representative: Global IP Europe Patentanwaltskanzlei
(86) International application number: PCT/JP2019/021254
(87) International publication number: WO 2019/239891

(57) **Abstract**

Provided is a sealing apparatus that provides improved sealing performance for a shaft rotating at low speed. A seal lip (21) of a sealing apparatus (1) has a sealing side surface (22) that is a surface facing a target to be sealed side and being formed annularly around an axis x and an external side surface (23) that is a surface facing an external side and being formed annularly around the axis x. An edge of the external side surface (23) on an inner periphery side is joined to the sealing side surface (22). The sealing side surface (22) is formed such that the seal lip (21) is in contact with a shaft and the sealing side surface (22) extends slantingly to the external side relative to a surface orthogonal to the axis x in a state in which the sealing apparatus (1) is attached to an object to which the sealing apparatus (1) is designed to be attached.

## Description

### Technical Field

The present invention relates to sealing apparatuses and sealing methods using sealing apparatuses, and particularly relates to a sealing apparatus used for a speed reducer and to a sealing method using the sealing apparatus.

### Background Art

Some industrial machines such as industrial robots intended for assembly work have drive arms that are each formed by connecting links via a joint. In the joint, a drive mechanism is provided to drive the links. For instance, a speed reducer is provided to decelerate motion input from an output source such as a motor and output the decelerated motion. The speed reducer includes a lot of drive members such as gear wheels and bearings. A lubricant such as grease is sealed in the joint to smoothly drive the drive members of the speed reducer and prevent wear. Conventionally, sealing apparatuses have been used to seal the lubricant in such a joint.

A sealing apparatus for the speed reducer has an annular elastic body part that includes a seal lip formed on an inner periphery side. The sealing apparatus is used to seal an annular gap between a through-hole formed in a housing of the joint and a shaft as an output shaft that is inserted through the through-hole (for example, see Patent Literature 1). The sealing apparatus thus configured is fitted to the through-hole in the housing such that the elastic body part is in contact with the through-hole to provide sealing between the through-hole and the sealing apparatus and that the seal lip is in contact with the shaft to provide sealing between the shaft and the sealing apparatus.

### Document List

### Patent Literature

Patent Literature 1: Japanese Patent Application Publication No. 2011-89609

### Summary of Invention

### Technical Problem

In the joint of the industrial machine as described above, the shaft rotates at low speed. Thus, unlike oil seals used for shafts that rotate at high speeds such as oil seals for internal combustion machines, the sealing apparatus for the speed reducer cannot produce sealing effect by pump action. Consequently, the sealing apparatus for the speed reducer described above increases a tensional force of the seal lip to improve sealing performance. However, in some cases, the sealing apparatus has failed to seal the grease for a long time, resulting in leakage of the grease through a gap between the seal lip and the shaft.

Thus, sealing apparatuses used for shafts of speed reducers and other drive mechanisms that rotate at low speed in joints of industrial machines have been required to have a structure that provides improved sealing performance.

In view of the challenge described above, it is an object of the present invention to provide a sealing apparatus that provides improved sealing performance for a shaft rotating at low speed and a sealing method using the sealing apparatus.

### Solution to Problem

A sealing apparatus according to the present invention, accomplished to attain the object described above, is for sealing between a through-hole and a shaft that is inserted through the through-hole and that rotates in both directions in an object to which the sealing apparatus is attached, characterized in that the sealing apparatus includes: a reinforcing ring formed annularly around an axis; and an elastic body part formed from an elastic body that is attached to the reinforcing ring and that is formed annularly around the axis, the elastic body part including an annular seal lip that extends along the axis and that is in contact with the shaft such that the shaft is slidable, wherein the seal lip has a sealing side surface that is a surface facing a target to be sealed side and being formed annularly around the axis and an external side surface that is a surface facing an external side opposite the target to be sealed side and being formed annularly around the axis, an edge of the external side surface on an inner periphery side being joined to the sealing side surface, and wherein the sealing side surface is formed in such a way as to extend so as to be parallel to a surface orthogonal to the axis or extend slantingly to the external side relative to the surface orthogonal to the axis when the seal lip is in contact with the shaft in a state in which the sealing apparatus is attached to the object or when a lubricant inside the object to which the sealing apparatus is attached presses the seal lip in contact with the shaft in a state in which the sealing apparatus is used for the object.

In the sealing apparatus according to one aspect of the present invention, the sealing side surface extends so as to be parallel to the surface orthogonal to the axis or extends slantingly to the external side relative to the surface orthogonal to the axis.

In the sealing apparatus according to one aspect of the present invention, the sealing side surface extends slantingly to the target to be sealed side relative to the surface orthogonal to the axis.

In the sealing apparatus according to one aspect of the present invention, the sealing side surface forms an angle greater than or equal to 60° and less than 90° with the axis.

In the sealing apparatus according to one aspect of the present invention, the sealing side surface is a flat surface or a surface that increases in diameter as progress from the target to be sealed side toward the external side.

In the sealing apparatus according to one aspect of the present invention, the sealing side surface is a surface that increases in diameter as progress from the external side toward the target to be sealed side.

The sealing apparatus according to one aspect of the present invention includes a garter spring to press the seal lip in a direction toward the axis, wherein the seal lip has an accommodating groove that is an annular groove recessed to the inner periphery side and that is at a position facing away from the sealing side surface and the external side surface, and wherein the garter spring is housed in the accommodating groove.

A sealing method using a sealing apparatus according to the present invention, accomplished to attain the object described above, is a method of sealing a sealed component using a sealing apparatus for sealing between a through-hole and a shaft that is inserted through the through-hole and that rotates in both directions in an object to which the sealing apparatus is attached, the sealing apparatus including: a reinforcing ring formed annularly around an axis; and an elastic body part formed from an elastic body that is attached to the reinforcing ring and that is formed annularly around the axis, the elastic body part including an annular seal lip that extends along the axis and that is in contact with the shaft such that the shaft is slidable, the seal lip having a sealing side surface that is a surface facing a target to be sealed side and being formed annularly around the axis and an external side surface that is a surface facing an external side opposite the target to be sealed side and being formed annularly around the axis, an edge of the external side surface on an inner periphery side being joined to the sealing side surface, characterized in that the method includes allowing the sealing side surface to either extend so as to be parallel to a surface orthogonal to the axis or extend slantingly to the external side relative to the surface orthogonal to the axis when the sealing apparatus is fitted to the through-hole and the seal lip is put into contact with the shaft or when a lubricant inside the object to which the sealing apparatus is attached presses the seal lip in contact with the shaft in a state in which the sealing apparatus is used for the object.

### Effects of Invention

The sealing apparatus and the sealing method using the sealing apparatus, according to the present invention, provide improved sealing performance for a shaft rotating at low speed.

### Brief Description of Drawings

[Fig. 1] A cross-sectional view taken along an axis for illustrating a schematic configuration of a sealing apparatus according to a first embodiment of the present invention
[Fig. 2] A partial enlarged cross-sectional view of the sealing apparatus illustrated in Fig. 1
[Fig. 3] A partial enlarged cross-sectional view for illustrating the sealing apparatus according to the first embodiment of the present invention in an attached state
[Fig. 4] A partial enlarged cross-sectional view enlargedly illustrating a vicinity of a sealing side surface of a seal lip of the sealing apparatus in an attached state as illustrated in Fig. 3
[Fig. 5] A partial enlarged cross-sectional view of a sealing apparatus taken along an axis, illustrating a modification example of the sealing side surface of the sealing apparatus according to the first embodiment of the present invention [Fig. 6] A partial enlarged cross-sectional view taken along an axis for illustrating a schematic configuration of a sealing apparatus according to a second embodiment of the present invention
[Fig. 7] A partial enlarged cross-sectional view for illustrating the sealing apparatus according to the second embodiment of the present invention in a first attached state
[Fig. 8] A partial enlarged cross-sectional view for illustrating the sealing apparatus according to the second embodiment of the present invention in a second attached state
[Fig. 9] A partial enlarged cross-sectional view for illustrating the sealing apparatus according to the second embodiment of the present invention in a third attached state
[Fig. 10] A partial enlarged cross-sectional view enlargedly illustrating a vicinity of a sealing side surface of a seal lip of a sealing apparatus in an usage state to describe operation of the sealing apparatus that has been in the second attached state illustrated in Fig. 8 and is put in the usage state
[Fig. 11] A partial enlarged cross-sectional view enlargedly illustrating a vicinity of a sealing side surface of a seal lip of a sealing apparatus in an usage state to describe operation of the sealing apparatus that has been in the third attached state illustrated in Fig. 9 and is put in the usage state

### Description of Embodiments

Hereinafter, embodiments of the present invention will be described with reference to the drawings.

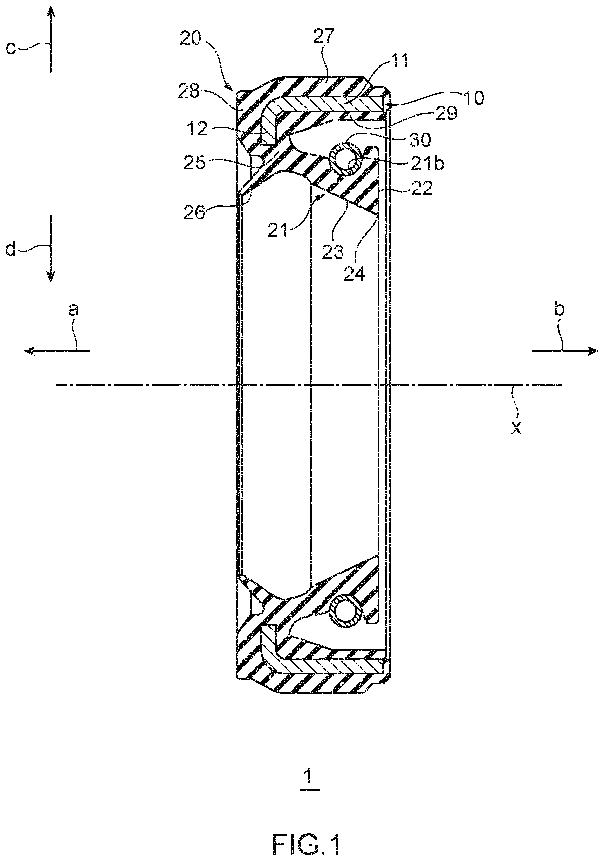

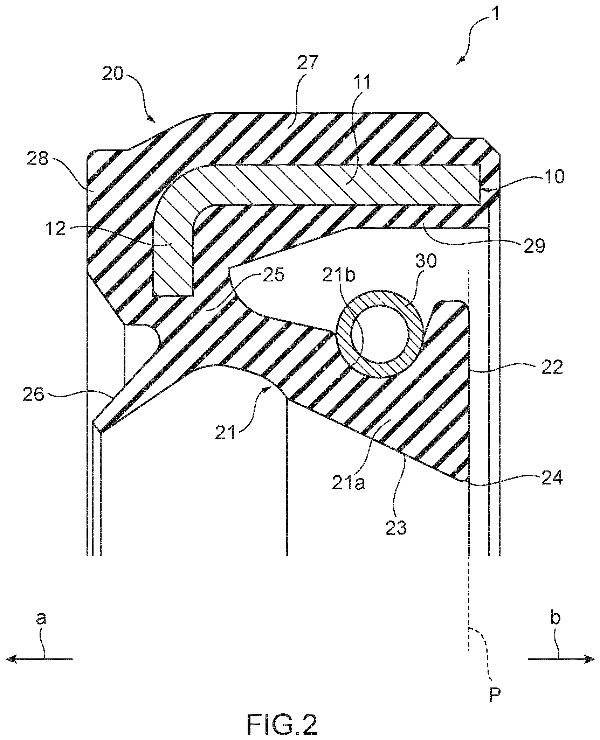

Fig. 1 is a cross-sectional view taken along an axis x for illustrating a schematic configuration of a sealing apparatus 1 according to a first embodiment of the present invention. Fig. 2 is a partial enlarged cross-sectional view of the sealing apparatus 1. The sealing apparatus 1 according to the first embodiment of the present invention is used for sealing between a through-hole and a shaft that is inserted through the through-hole and that rotates in both directions, in which the through-hole and the shaft rotate relative to each other. The sealing apparatus 1 is used, for example, to seal a lubricant used for a speed reducer in a joint of a robot. The sealing apparatus 1 is used to seal a gap between a through-hole in a housing of a joint of a robot and an output shaft of a speed reducer that is put through the through-hole in the housing, as described later. An object to which the sealing apparatus 1 is applied (attached) is not limited to this specific example. The sealing apparatus can be applied to other rotating members in various machines.

Hereinafter, a direction directed by an arrow a in a direction of the axis x (see Fig. 1) represents an external side (hereinafter also referred to as "an outer side"), and a direction directed by an arrow b in the direction of the axis x (see Fig. 1) represents a target to be sealed side (hereinafter also referred to as "an inner side"), for convenience of explanation. The outer side means a side facing the outside of an object to which the sealing apparatus is applied, and the inner side means a side facing the inside of the object to which the sealing apparatus is applied. More specifically, the outer side means a side facing the outside of the housing of the joint of the robot, or an atmosphere side, and the inner side means a side facing the inside of the housing of the joint of the robot. In a direction perpendicular to the axis x (hereinafter also referred to as a "radial direction"), a direction away from the axis x (a direction directed by an arrow c in Fig. 1) represents an outer periphery side, and a direction approaching the axis x (a direction directed by an arrow d in Fig. 1) represents an inner periphery side.

The sealing apparatus 1 includes a reinforcing ring 10 formed annularly around the axis x and an elastic body part 20 formed from an elastic body that is attached to the reinforcing ring 10 and that is formed annularly around the axis x. The elastic body part 20 includes an annular seal lip 21 that extends along the axis x and that is in contact with a shaft of the object to which the sealing apparatus is attached such that the shaft is slidable. The seal lip 21 has a sealing side surface 22 that is a surface facing the target to be sealed side (the inner side) and being formed annularly around the axis x and an external side surface 23 that is a surface facing the external side (the outer side) opposite the target to be sealed side (the inner side) and being formed annularly around the axis x. An edge of the external side surface 23 on the inner periphery side is joined to the sealing side surface 22. The sealing side surface 22 is formed such that the seal lip 21 is in contact with the shaft and the sealing side surface 22 extends slantingly to the external side relative to a surface orthogonal to the axis x in an attached state in which the sealing apparatus 1 is attached to the object, as described later. Hereinafter, a structure of the sealing apparatus 1 will be described in detail.

As illustrated in Fig. 1, the reinforcing ring 10 is an annular member centered about or substantially centered about the axis x and is made of metal. A shape of a cross section along the axis x (hereinafter also simply referred to as a "cross section") of the reinforcing ring 10 is an L shape or a substantially L shape. The reinforcing ring 10, for example, includes a cylindrical part 11 that is a cylindrical or substantially cylindrical portion extending in the direction of the axis x, and a disc part 12 that is a hollow disc-shaped portion extending toward the inner periphery side from an outer end portion of the cylindrical part 11. The cylindrical part 11 is formed such that the sealing apparatus 1 is allowed to be fitted to an inner peripheral surface of the through-hole formed in the housing of the joint of the robot, as described later. The cylindrical part 11 may be in contact with the inner peripheral surface of the through-hole through a portion of the elastic body part 20 as in the illustrated form to be able to be fitted to the inner peripheral surface of the through-hole, or may be directly in contact with the inner peripheral surface of the through-hole to be able to be fitted to the inner peripheral surface of the through-hole.

As illustrated in Fig. 1, the elastic body part 20 is attached to the reinforcing ring 10, and is integrally formed with the reinforcing ring 10 to cover the entire reinforcing ring 10 in the present embodiment. The elastic body part 20, as described above, includes the seal lip 21. The elastic body part 20 also includes an annular lip waist portion 25 and an annular dust lip 26. In the elastic body part 20, the lip waist portion 25 is a portion positioned in the vicinity of an end portion on the inner periphery side of the disc part 12 of the reinforcing ring 10. The dust lip 26 is an annular lip that is provided on the outer side (an arrow a direction side) of the seal lip 21 and that extends toward the axis x. The seal lip 21 is formed so as to be in contact with the shaft of the object, to which the sealing apparatus is attached, so that the shaft is slidable, as described later. The dust lip 26 is formed so as to be in contact with the shaft so that the shaft is slidable.

Specifically, the seal lip 21 is a portion that extends toward the inner side from the lip waist portion 25, and an annular portion centered about or substantially centered about the axis x, and is formed by facing the cylindrical part 11 of the reinforcing ring 10, as illustrated in Fig. 1. The seal lip 21 has an annular lip distal end portion 21a at an inner end portion, the lip distal end portion 21a having a cross section formed in a wedge shape projecting toward the inner periphery side. The lip distal end portion 21a is a portion that is in contact with the shaft of the object, to which the sealing apparatus is attached, to seal between the shaft and the sealing apparatus 1 and is a portion that is defined by the sealing side surface 22 and the external side surface 23. A garter spring 30 included in the sealing apparatus 1 is fitted at a position facing away from the sealing side surface 22 and the external side surface 23, i.e., at a position facing away from the lip distal end portion 21a, on the outer periphery side of the seal lip 21. The garter spring 30 presses the seal lip 21, or more specifically, the lip distal end portion 21a, in a direction toward the axis x to apply a tensional force of a predetermined magnitude to the lip distal end portion 21a against the shaft. The seal lip 21 has an accommodating groove 21b, an annular groove recessed to the inner periphery side, at the position facing away from the sealing side surface 22 and the external side surface 23, i.e., at the position facing away from the lip distal end portion 21a. The garter spring 30 is housed in the accommodating groove 21.

In the seal lip 21, the sealing side surface 22 and the external side surface 23, as described above, constitute a part that defines the lip distal end portion 21a. Edges of the sealing side surface 22 and the external side surface 23 on the inner periphery side are joined to each other. A lip distal end 24, a part put into contact with the shaft of the object, to which the sealing apparatus is attached, is formed at the joined edges of the side surfaces. As illustrated in Figs. 1 and 2, the sealing side surface 22 is a surface facing the target to be sealed side (the inner side) and is an annular plane extending over a surface (a plane p) orthogonal to the axis x. In other words, the sealing side surface 22 extends parallel to the plane p, and the sealing side surface 22 and the axis x form an angle of 90°. As illustrated in Figs. 1 and 2, the external side surface 23 is an annular surface extending from the edge of the sealing side surface 22 on the inner periphery side (the lip distal end 24) to the outer side diagonally with respect to the axis x and increasing in diameter as progress toward the outer side along the axis x. The external side surface 23 is, for example, a surface of a conical or substantially conical shape. The external side surface 23 may be a curved surface that increases in diameter as progress toward the outer side along the axis x or may be another surface that increases in diameter as described above.

The dust lip 26 extends outwardly from the lip waist portion 25 and toward the axis x, more particularly, as illustrated in Figs. 1, 2, the dust lip 26 extends in a direction toward the outer side and the inner periphery side from the lip waist portion 25. The dust lip 26 prevents foreign matter such as muddy water, sand, and dust from entering in a direction from the outer side toward the lip distal end portion 21a. The dust lip 26 may be adjacent to the shaft without being in contact with the shaft.

The elastic body part 20 includes a gasket part 27, a rear cover part 28, and a lining part 29. In the elastic body part 20, the gasket part 27 is a portion that covers the cylindrical part 11 of the reinforcing ring 10 from the outer periphery side. As described later, the thickness in the radial direction of the gasket part 27 is set so that, when, in the object to which the sealing apparatus is attached, the sealing apparatus 1 is press-fitted into a through-hole through which the shaft is inserted, the gasket part 27 is compressed between the through-hole and the cylindrical part 11 of the reinforcing ring 10 in the radial direction so that the gasket part 27 generates a fitting force of a predetermined magnitude in the radial direction. The rear cover part 28 is a portion that covers the disc part 12 of the reinforcing ring 10 from the outer side. The lining part 29 is a portion that covers the reinforcing ring 10 from the inner side and the inner periphery side.

Note that the elastic body part 20 is integrally formed from an elastic material, and the seal lip 21, the lip waist portion 25, the dust lip 26, the gasket part 27, the rear cover part 28, and the lining part 29 are respective portions of the elastic body part 20 that is integrally formed from the elastic material.

The metal material for the reinforcing ring 10 is, for example, stainless steel or SPCC (a cold rolled steel sheet). Examples of the elastic body of the elastic body part 20 include various rubber materials. The various rubber materials are, for example, synthetic rubber such as nitrile rubber (NBR), hydrogenated nitrile rubber (H-NBR), acrylic rubber (ACM), and fluororubber (FKM). The reinforcing ring 10 is manufactured by press working or forging, for example, and the elastic body part 20 is molded with a mold by cross-linking (vulcanization). During the cross-linking, the reinforcing ring 10 is placed in the mold, the elastic body part 20 is bonded to the reinforcing ring 10 by cross-linking bonding, and the elastic body part 20 is integrally molded with the reinforcing ring 10.

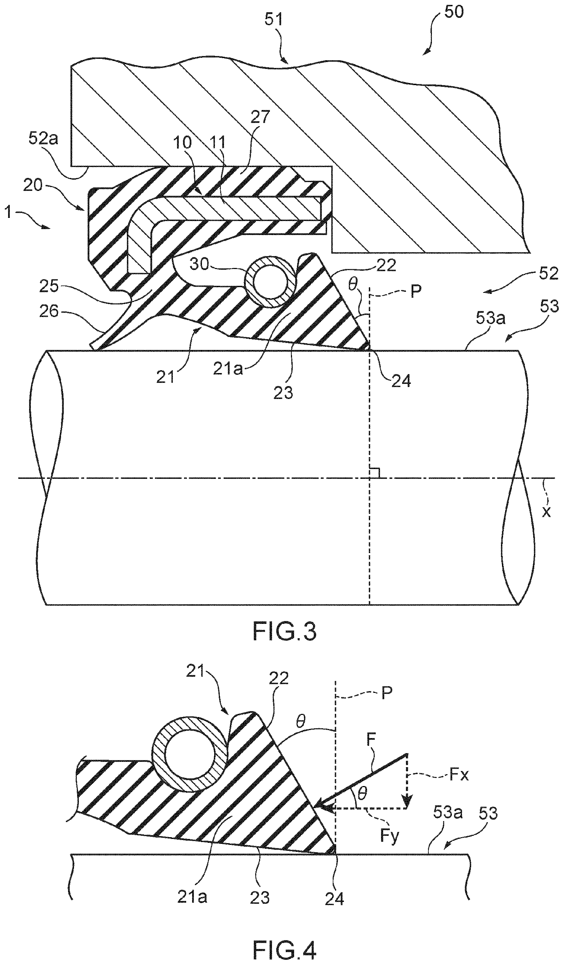

Next, operation of the sealing apparatus 1 having the above-described configuration will be described. Fig. 3 is a view for illustrating the sealing apparatus 1 in an attached state in which the sealing apparatus is attached to a joint 50 of a robot, an example of an object to which the sealing apparatus is attached, and a partial enlarged cross-sectional view along the axis x enlargedly illustrating the vicinity of the sealing apparatus 1 in the joint 50. The robot to which the sealing apparatus is attached is, for example, a robot for industrial use that turns links making up an arm through the joint to perform work. The sealing apparatus 1 is fitted to a through-hole 52 formed in a housing 51 of the joint 50 to seal an annular space between the through-hole 52 and an output shaft 53, a shaft passing through the through-hole 52. The output shaft 53 is an output shaft of a speed reducer (not illustrated) in the joint 50, extending from the through-hole 52 to the outer side of the housing 51 and connecting to the links (not illustrated). The output shaft 53 transmits force decelerated by the speed reducer to the links. The speed reducer includes a lot of drive members such as gear wheels and bearings. A lubricant such as grease is applied to the drive members to smoothly drive the drive members of the speed reducer and prevent wear. The sealing apparatus 1 seals the grease in the housing 51. The joint 50 has a well-known configuration, and a detailed description of the configuration is omitted herein.

As illustrated in Fig. 3, the sealing apparatus 1 in the attached state is fitted to the through-hole 52 formed in the housing 51 of the joint 50. The output shaft 53 of the speed reducer is rotatably inserted through the through-hole 52. Note that with the speed reducer being controlled, the output shaft 53 rotates around the axis x in both directions. The output shaft 53, unlike an engine, a transmission, and an axle in a vehicle, does not rotate at high speeds but rotates at low speeds. A peripheral speed of the output shaft 53 is less than or equal to 2 m/second, for example.

In the through-hole 52 in the housing 51, a space between an outer peripheral surface 53a of the output shaft 53 and an inner peripheral surface 52a of the through-hole 52 is sealed by the sealing apparatus 1. Specifically, the sealing apparatus 1 is fitted to the through-hole 52, the gasket part 27 of the elastic body part 20 is compressed between the cylindrical part 11 of the reinforcing ring 10 and the inner peripheral surface 52a of the through-hole 52 so that the gasket part 27 is in close contact with the inner peripheral surface 52a of the through-hole 52, thereby sealing between the sealing apparatus 1 and the through-hole 52 on the outer periphery side. The lip distal end portion 21a of the seal lip 21 of the elastic body part 20 is in contact with the outer peripheral surface 53a of the output shaft 53 so that the output shaft 53 is slidable. The seal lip 21 is formed such that the lip distal end portion 21a is in contact with the outer peripheral surface 53a of the output shaft 53 with a predetermined interference. The lip distal end portion 21a put into contact with the output shaft 53 is pressed against the outer peripheral surface 53a by the tensional force of the garter spring 30.

As described above, when the sealing apparatus is in the attached state, the lip distal end portion 21a of the seal lip 21 is in contact with the outer peripheral surface 53a of the output shaft 53 with the predetermined interference, and as illustrated in Fig. 3, the seal lip 21 is deformed or shifted such that the sealing side surface 22 slants to the outer side, i.e., the sealing side surface 22 extends slantingly to the outer side with respect to the plane p orthogonal to the axis x. In other words, as illustrated in Fig. 3, the sealing side surface 22 on the outer side faces the plane p that is in contact with the lip distal end 24 and an angle (a tilt angle θ) is formed by the plane p, which is in contact with the lip distal end 24, and the sealing side surface 22. The tilt angle θ has a value greater than 0. The sealing side surface 22 slants, for example, when the seal lip 21 is tilted with respect to the lip waist portion 25 or is deformed at a part close to the lip waist portion 25.

In the sealing apparatus 1, as described above, the lip distal end portion 21a is in contact with the outer peripheral surface 53a of the output shaft 53 with the predetermined interference, and the lip distal end portion 21a is pressed against the outer peripheral surface 53a by the garter spring 30. This configuration provides sealing between the sealing apparatus 1 and the output shaft 53 on the inner periphery side and prevents the grease stored in the housing 51 from leaking out to the outside.

A distal end edge of the dust lip 26 is in contact with the outer peripheral surface 53a of the output shaft 53 so that the output shaft 53 is slidable, thereby preventing foreign matter from entering into the housing 51 from the outside. The dust lip 26 may not be in contact with the output shaft 53.

In the conventional sealing apparatus, in a similar way to the lip distal end portion 21a described above, the seal lip is in contact with an output shaft and is pressed against the output shaft by a garter spring to prevent the grease from leaking out to the outside. However, since the output shaft rotates at low speed and the grease is pressed by motion of the drive members of the speed reducer in the joint, the grease goes past the seal lip and leaks out to the outside in some cases. In contrast, in the sealing apparatus 1 in the attached state, as illustrated in Fig. 3, the sealing side surface 22 is tilted to the outer side at the tilt angle θ with respect to the plane p. As a result, as illustrated in the enlarged view of Fig. 4, the grease pressed by the speed reducer comes into contact with the sealing side surface 22 of the seal lip 21 and presses the sealing side surface 22 with force of a flowing pressure F. The flowing pressure F is force that is applied in a direction orthogonal to the sealing side surface 22 and causes a component of the force (pressing force Fx) toward the inner periphery side in the radial direction. The sealing side surface 22 is pressed to the inner periphery side by the pressing force Fx and thus the lip distal end portion 21a is pressed against the outer peripheral surface 53a of the output shaft 53. With the pressing force Fx acting on the lip distal end portion 21a, the lip distal end portion 21a is pressed against the outer peripheral surface 53a of the output shaft 53 with force stronger than the force to the seal lip of the conventional sealing apparatus. Hence, leakage of the grease is prevented with improved reliability.

In this way, the sealing apparatus 1 according to the first embodiment of the present invention provides improved sealing performance for the output shaft 53 rotating at low speed.

A sealing method using the sealing apparatus 1 according to the above-described embodiment of the present invention enables the sealing side surface 22 to extend slantingly to the external side with respect to a surface (the plane p) orthogonal to the axis x when the seal lip 21 (the lip distal end portion 21a) is in contact with the output shaft 53. This method provides improved sealing performance for the output shaft 53 rotating at low speed.

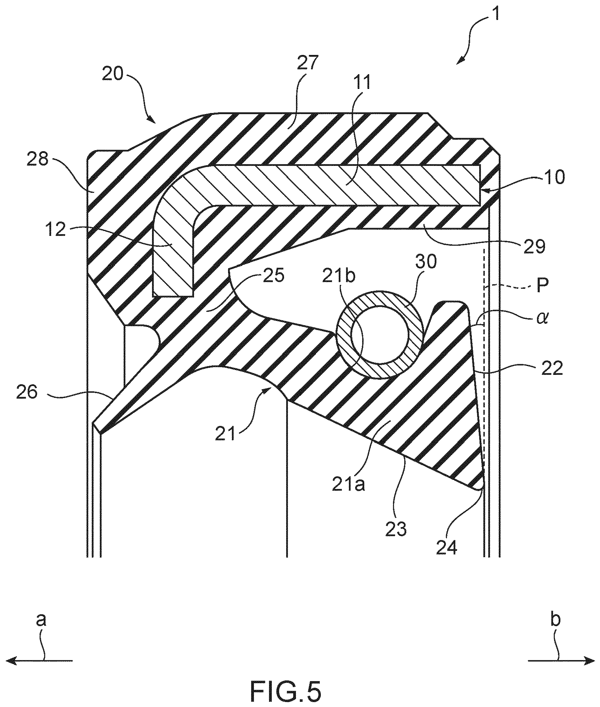

Fig. 5 is a partial enlarged cross-sectional view of a sealing apparatus 1 taken along the axis x, illustrating a modification example of the sealing side surface 22 of the sealing apparatus 1 according to the first embodiment of the present invention described above. As illustrated in Fig. 5, the sealing side surface 22 may be a surface extending slantingly to the outer side relative to the plane p rather than extending along the plane p orthogonal to the axis x. In the illustrated example, the sealing side surface 22 is tilted away from the plane p to the outer side at a predetermined angle (α°). The angle α has a value greater than 0. In this modification example, the sealing side surface 22 increases in diameter as progress toward the outer side in the direction of the axis x and is a conical or substantially conical surface or another curved surface, for example. In a cross section illustrated in Fig. 5, the sealing side surface 22 may not form a straight line tilted to the outer side with respect to a line (a line formed by the plane p) orthogonal to the axis x but may form a curved line tilted to the outer side with respect to the line orthogonal to the axis x or may form a line that combines a straight line and a curved line. The sealing apparatus 1 having the sealing side surface 22 according to this modification example in an attached state operates in a similar way to the sealing apparatus 1 described above and can produce the similar effects by enabling pressing force Fx of the grease to act on the lip distal end portion 21a.

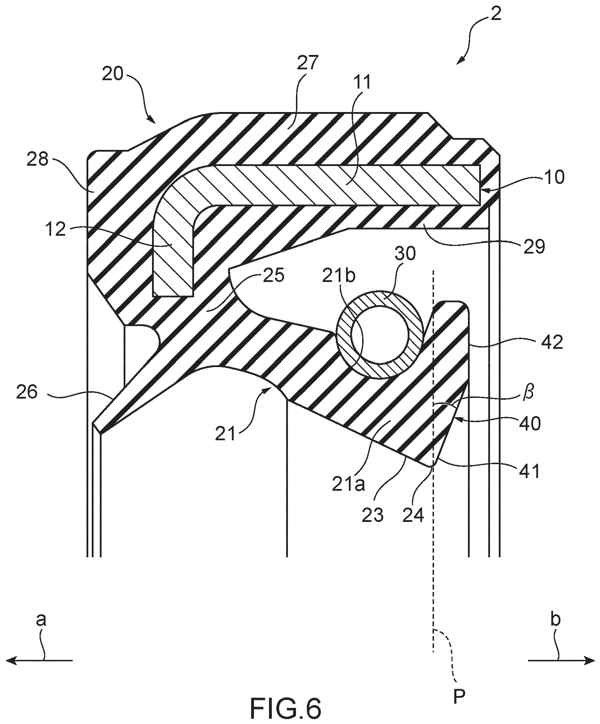

Next, a sealing apparatus 2 according to a second embodiment of the present invention will be described. Fig. 6 is a partial enlarged cross-sectional view taken along the axis x for illustrating a schematic configuration of the sealing apparatus 2 according to the second embodiment of the present invention. The sealing apparatus 2 according to the second embodiment of the present invention differs in sealing side surface structure from the sealing apparatus 1 described above according to the first embodiment of the present invention. Hereinafter, components of the sealing apparatus 2 according to the second embodiment of the present invention that are identical or similar in function to those of the sealing apparatus 1 according to the first embodiment of the present invention are assigned the same reference signs, and descriptions thereof are omitted. Parts that differ between the sealing apparatuses will be described.

As illustrated in Fig. 6, the sealing apparatus 2 according to the second embodiment of the present invention has a sealing side surface 40 instead of the sealing side surface 22 of the sealing apparatus 1. The sealing side surface 40 extends slantingly to the target to be sealed side (the inner side) with respect to the plane p orthogonal to the axis x. In an attached state or a usage state in which the seal lip 21 is pressed by grease in an object to which the sealing apparatus is attached, the sealing side surface 40 extends slantingly to the outer side with respect to the plane p. In the attached state or the usage state in which the seal lip 21 is pressed by the grease in the object to which the sealing apparatus is attached, the sealing side surface 40 may extend so as to be parallel to the plane p.

Specifically, as illustrated in Fig. 6, the sealing side surface 40 extends slantingly to the inner side (an arrow b direction side) at a predetermined angle (an angle β) with respect to the plane p passing through a lip distal end 24. The sealing side surface 40, for example, has a tilted segment 41 that is a portion tilted at the angle β with respect to the plane p passing through the lip distal end 24 and an outer peripheral segment 42 extending from an edge of the tilted segment 41 on the outer periphery side. In a cross section illustrated in Fig. 6, the tilted segment 41 of the sealing side surface 40 may not form a straight line tilted to the inner side with respect to a line (a line formed by the plane p) orthogonal to the axis x but may form a curved line tilted to the inner side with respect to the line orthogonal to the axis x or may form a line that combines a straight line and a curved line. The tilted segment 41 is a surface of a conical or substantially conical shape formed annularly around the axis x and is tilted to the inner side at the angle β with respect to the plane p. The outer peripheral segment 42 is a surface of a hollow disc shape formed annularly around the axis x, extending so as to be along the plane p or be tilted with respect to the plane p. The outer peripheral segment 42 may be a flat surface or a curved surface. The sealing side surface 40 may be without the outer peripheral segment 42 and may be made up of only the tilted segment 41.

The angle β for the tilted segment 41 is set at a value greater than or equal to 60° and less than 90° (60° ≤ β < 90°). If the angle β satisfies 60° ≤ β < 90°, the tilted segment 41 of the sealing side surface 40 in the attached state is allowed to be tilted to the outer side relative to the plane p, in a similar way to the sealing side surface 22 of the sealing apparatus 1 described above, or be parallel to the plane p. Even if the tilted segment 41 of the sealing side surface 40 in the attached state is not tilted to the outer side relative to the plane p or is not parallel to the plane p, the tilted segment 41 of the sealing side surface 40, which is tilted to the inner side, is pressed by the grease and is allowed to be tilted to the outer side relative to the plane p or be parallel to the plane p in the usage state, with proviso that the angle β is in a range of 60° ≤ β < 90°. The angle β for the tilted segment 41 may be in a range other than the range of 60° ≤ β < 90°, with proviso that the angle β allows the tilted segment to be tilted or be parallel to as described above.

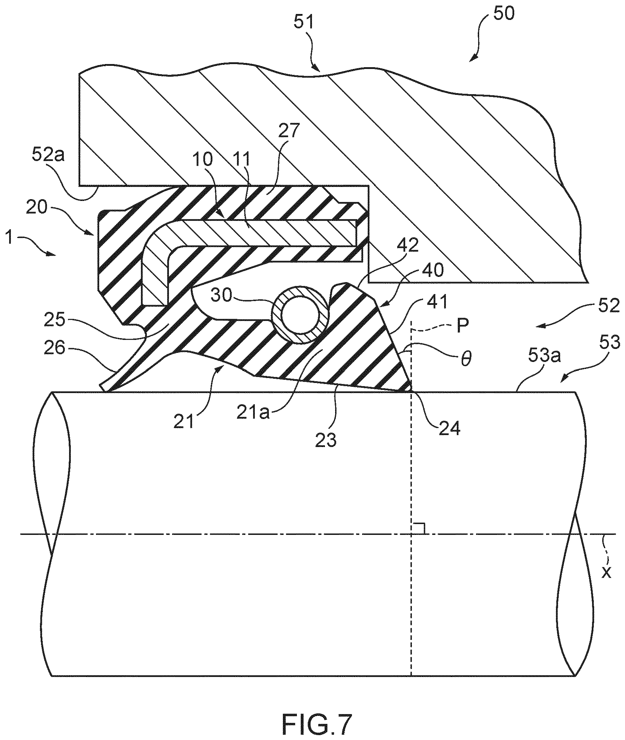

Next, operation of the sealing apparatus 2 having the above-described configuration will be described. Figs. 7 to 9 are partial enlarged cross-sectional views for illustrating the sealing apparatus 2 according to the second embodiment of the present invention in respective attached states. In an attached state in which the sealing apparatus 2 is attached to a joint 50 of a robot in a similar way to the sealing apparatus 1 described above, a lip distal end portion 21a of the seal lip 21 is, as illustrated in Fig. 7, in contact with an outer peripheral surface 53a of an output shaft 53 with a predetermined interference, and the seal lip 21 is deformed or shifted such that the tilted segment 41 of the sealing side surface 40 is tilted to the outer side from a position in a free state illustrated in Fig. 6. The tilted segment 41 of the sealing side surface 40 can be in any of three attached states, i.e., a first attached state, a second attached state, and a third attached state, depending on the value of the angle β for the tilted segment 41 in the free state.

Specifically, in the first attached state, as illustrated in Fig. 7, the tilted segment 41 of the sealing side surface 40 extends slantingly to the outer side relative to the plane p orthogonal to the axis x. In other words, as illustrated in Fig. 7, the tilted segment 41 on the outer side faces the plane p that is in contact with the lip distal end 24 and an angle (a tilt angle θ) is formed by the plane p, which is in contact with the lip distal end 24, and the tilted segment 41. The tilt angle θ has a value greater than 0.

Thus, in the sealing apparatus 2 in the first attached state, the tilted segment 41 of the sealing side surface 40 is tilted, as illustrated in Fig. 7, to the outer side at the tilt angle θ with respect to the plane p in a similar way to the sealing apparatus 1 in the attached state described above. As a result, in the usage state, in a similar way to the sealing apparatus 1 (see Fig. 4), the grease pressed by the speed reducer comes into contact with the tilted segment 41 of the sealing side surface 40 of the seal lip 21 and presses the tilted segment 41 with force of a flowing pressure F in a direction orthogonal to the tilted segment 41. The flowing pressure F causes pressing force Fx, a component of the force toward the inner periphery side in the radial direction. The lip distal end portion 21a is pressed against the outer peripheral surface 53a of the output shaft 53 by the pressing force Fx. With the pressing force Fx acting on the lip distal end portion 21a, the lip distal end portion 21a is pressed against the outer peripheral surface 53a of the output shaft 53 with force stronger than the force to the conventional seal lip. Hence, leakage of the grease is prevented with improved reliability.

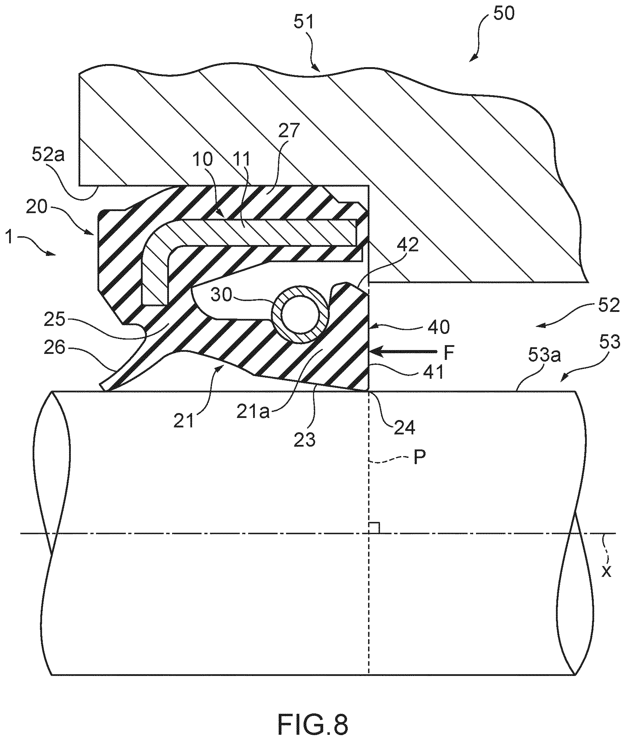

In the second attached state, as illustrated in Fig. 8, the tilted segment 41 of the sealing side surface 40 extends so as to be parallel to the plane p orthogonal to the axis x. In other words, as illustrated in Fig. 8, the tilt angle θ for the tilted segment 41 with respect to the axis x is 0°.

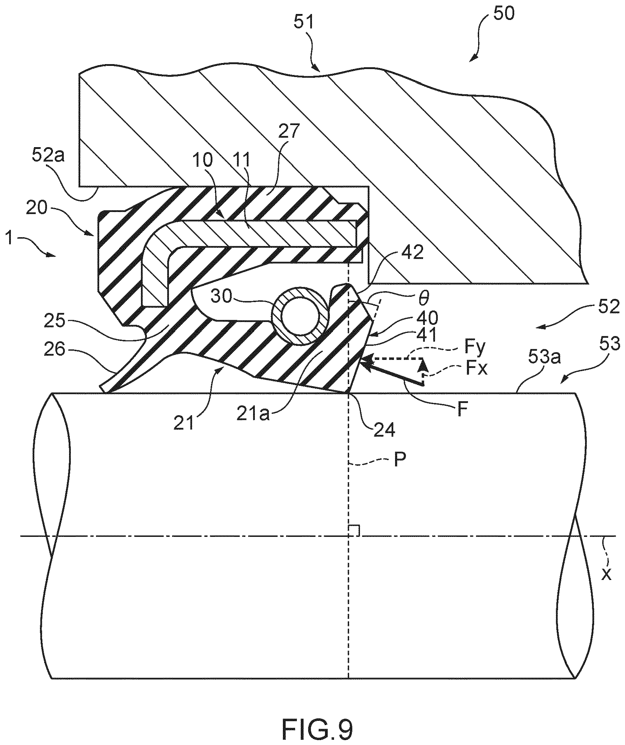

In the third attached state, as illustrated in Fig. 9, the tilted segment 41 of the sealing side surface 40 extends slantingly to the inner side with respect to the plane p passing through the lip distal end 24. In other words, as illustrated in Fig. 9, the tilted segment 41 on the inner side faces away from the plane p that is in contact with the lip distal end 24 and an angle (a tilt angle θ) is formed by the plane p and the tilted segment 41. The tilt angle θ has a negative value less than 0 (an angle at which the tilted segment is tilted to the inner side relative to the plane p).

The sealing apparatus 2 in any of the second attached state illustrated in Fig. 8 and the third attached state illustrated in Fig. 9 allows the seal lip 21 to be pressed by the grease with force of a flowing pressure F in the usage state and thereby prevents the grease from leaking. Specifically, even if the tilted segment 41 of the sealing side surface 40 is not tilted to the outer side with respect to the plane p in any of the attached states, the tilted segment 41 is pressed by the grease with the flowing pressure F in the usage state. The flowing pressure F causes the tilted segment 41 to lean to the outer side, and thus the tilt angle θ for the tilted segment 41 has a value greater than or equal to 0. The tilted segment 41 is tilted to the outer side with respect to the plane p in contact with the lip distal end 24 or is parallel to the plane p.

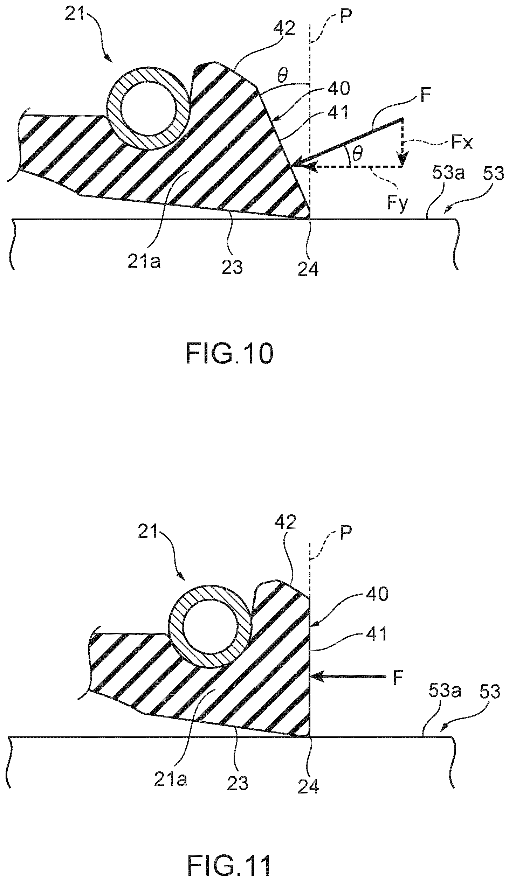

Specifically, the sealing apparatus 2 in the second attached state illustrated in Fig. 8 is subject to the flowing pressure F of the grease put vertically, i.e., the flowing pressure F applied in a direction parallel to the axis x, in the usage state and thus, as illustrated in Fig. 10, the tilted segment 41 pressed by the grease slants to the outer side, the tilted segment 41 is tilted to the outer side relative to the plane p, and the tilt angle θ for the tilted segment 41 has a value greater than 0. The sealing apparatus 2 in the third attached state illustrated in Fig. 9 is subject to the flowing pressure F of the grease, or more specifically pressing force Fy that is a component of the flowing pressure F in a direction parallel to the axis x, in the usage state and thus, as illustrated in Fig. 10 or Fig. 11, the tilted segment 41 pressed by the grease slants to the outer side, the tilted segment 41 is tilted to the outer side relative to the plane p or is parallel to the plane p, and the tilt angle θ for the tilted segment 41 has a value greater than or equal to 0.

When the tilted segment 41 is tilted to the outer side relative to the plane p (the tilt angle θ > 0), as illustrated in Fig. 10, due to the flowing pressure F of the grease in the usage state, the flowing pressure F causes pressing force Fx, a component of the flowing pressure F toward the inner periphery side in the radial direction, in common with the flowing pressure in the above-described attached state in Fig. 7. The lip distal end portion 21a is pressed against the outer peripheral surface 53a of the output shaft 53 by the pressing force Fx. With the pressing force Fx acting on the lip distal end portion 21a, the lip distal end portion 21a is pressed against the outer peripheral surface 53a of the output shaft 53 with force stronger than the force to the conventional seal lip. Hence, leakage of the grease is prevented with improved reliability.

Meanwhile, when the tilted segment 41 is parallel to the plane p (the tilt angle θ = 0), as illustrated in Fig. 11, due to the flowing pressure F of the grease in the usage state, the flowing pressure F put in a direction parallel to the axis x is applied to the tilted segment 41. In this state, force (pressing force Fx) intended to press the lip distal end portion 21a against the outer peripheral surface 53a of the output shaft 53 does not act on the tilted segment 41. However, pressing force Fx that is applied toward the outer periphery side in the radial direction to separate the lip distal end portion 21a from the outer peripheral surface 53a of the output shaft 53 also does not act on the tilted segment 41. Hence, leakage of the grease is prevented with improved reliability.

In this way, in the sealing apparatus 2 according to the second embodiment of the present invention in any of the attached state (the first attached state) and the usage state (the usage state when in the second attached state), the pressure side part 40 is subject to the pressing force Fx by the grease in the radial direction and thus the lip distal end portion 21a is pressed against the output shaft 53. With the pressing force Fx acting on the lip distal end portion 21a, the lip distal end portion 21a is pressed against the outer peripheral surface 53a of the output shaft 53 with force stronger than the force to the conventional seal lip. Hence, leakage of the grease is prevented with improved reliability.

In the sealing apparatus 2 according to the second embodiment of the present invention in the usage state when in the third attached state, the lip distal end portion 21a at the axis x is not subject to the pressing force Fx of the grease applied toward the outer periphery side in the radial direction. Thus, the lip distal end portion 21a is pressed against the outer peripheral surface 53a of the output shaft 53 with force stronger than the force to the conventional seal lip, and leakage of the grease is prevented.

In this way, the sealing apparatus 2 according to the second embodiment of the present invention provides improved sealing performance for the output shaft 53 rotating at low speed.

A sealing method using the sealing apparatus 2 according to the above-described embodiment of the present invention enables the tilted segment 41 of the sealing side surface 40 to extend slantingly from the lip distal end 24 to the external side relative to the plane p when the seal lip 21 (the lip distal end portion 21a) is in contact with the output shaft 53 in the attached state (the first attached state). This method provides improved sealing performance for the output shaft 53 rotating at low speed.

A sealing method using the sealing apparatus 2 according to the above-described embodiment of the present invention enables the flowing pressure F of the grease to be applied to the tilted segment 41 of the sealing side surface 40 so that the tilted segment 41 of the sealing side surface 40 extends slantingly to the outer side relative to the plane p or extends so as to be parallel to the plane p when the sealing apparatus 2 in the attached state (any of the second and the third attached states) in which the seal lip 21 (the lip distal end portion 21a) is in contact with the output shaft 53 is put in the usage state. This method provides improved sealing performance for the output shaft 53 rotating at low speed.

Although the embodiments of the present invention have been described above, the present invention is not limited to the sealing apparatuses 1 and 2 according to the embodiments of the present invention, and includes any modes falling within the scope of the concept and claims of the present invention. Respective configurations may be appropriately selectively combined to solve at least part of the above-described problems and achieve at least part of the above-described effects. For example, in the above-described embodiments, the shape, material, arrangement, size and the like of each component can be appropriately changed according to a specific use mode of the present invention.

The specific components to which the sealing apparatuses 1 and 2 according to the embodiments of the present invention are applied have been described above. However, the range of components to which the present invention is applied is not limited to the illustrated examples. The present invention may be applied to any component that can make use of effects produced by the present invention, such as components of other robots, general-purpose machinery, and industrial machinery.

### List of Reference Signs

1, 2 sealing apparatus,
10 reinforcing ring,
11 cylindrical part,
12 disc part,
20 elastic body part,
21 seal lip,
21a lip distal end portion,
21b accommodating groove 21b,
22, 40 sealing side surface,
23 external side surface,
24 lip distal end,
25 lip waist portion,
26 dust lip,
27 gasket part,
28 rear cover part,
29 lining part,
30 garter spring,
41 tilted segment,
42 outer peripheral segment,
50 joint,
51 housing,
52 through-hole,
52a inner peripheral surface,
53 output shaft,
53a outer peripheral surface,
F flowing pressure,
Fx, Fy pressing force,
p plane,
θ tilt angle

## Claims

1. A sealing apparatus for sealing between a through-hole and a shaft that is inserted through the through-hole and that rotates in both directions in an object to which the sealing apparatus is attached, **characterized in that** the sealing apparatus comprises:
a reinforcing ring formed annularly around an axis; and
an elastic body part formed from an elastic body that is attached to the reinforcing ring and that is formed annularly around the axis, the elastic body part including an annular seal lip that extends along the axis and that is in contact with the shaft such that the shaft is slidable,
wherein the seal lip has a sealing side surface that is a surface facing a target to be sealed side and being formed annularly around the axis and an external side surface that is a surface facing an external side opposite the target to be sealed side and being formed annularly around the axis, an edge of the external side surface on an inner periphery side being joined to the sealing side surface, and
wherein the sealing side surface is formed in such a way as to extend so as to be parallel to a surface orthogonal to the axis or extend slantingly to the external side relative to the surface orthogonal to the axis when the seal lip is in contact with the shaft in a state in which the sealing apparatus is attached to the object or when a lubricant inside the object to which the sealing apparatus is attached presses the seal lip in contact with the shaft in a state in which the sealing apparatus is used for the object.

2. The sealing apparatus according to claim 1, **characterized in that** the sealing side surface extends so as to be parallel to the surface orthogonal to the axis or extends slantingly to the external side relative to the surface orthogonal to the axis.

3. The sealing apparatus according to claim 1, **characterized in that** the sealing side surface extends slantingly to the target to be sealed side relative to the surface orthogonal to the axis.

4. The sealing apparatus according to claim 3, **characterized in that** the sealing side surface forms an angle greater than or equal to 60° and less than 90° with the axis.

5. The sealing apparatus according to claim 2, **characterized in that** the sealing side surface is a flat surface or a surface that increases in diameter as progress from the target to be sealed side toward the external side.

6. The sealing apparatus according to either claim 3 or 4, **characterized in that** the sealing side surface is a surface that increases in diameter as progress from the external side toward the target to be sealed side.

7. The sealing apparatus according to any one of claims 1 to 6, **characterized in that** the sealing apparatus comprises a garter spring to press the seal lip in a direction toward the axis,
wherein the seal lip has an accommodating groove that is an annular groove recessed to the inner periphery side and that is at a position facing away from the sealing side surface and the external side surface, and
wherein the garter spring is housed in the accommodating groove.

8. A method of sealing a sealed component using a sealing apparatus for sealing between a through-hole and a shaft that is inserted through the through-hole and that rotates in both directions in an object to which the sealing apparatus is attached, the sealing apparatus comprising:
a reinforcing ring formed annularly around an axis; and
an elastic body part formed from an elastic body that is attached to the reinforcing ring and that is formed annularly around the axis, the elastic body part including an annular seal lip that extends along the axis and that is in contact with the shaft such that the shaft is slidable, the seal lip having a sealing side surface that is a surface facing a target to be sealed side and being formed annularly around the axis and an external side surface that is a surface facing an external side opposite the target to be sealed side and being formed annularly around the axis, an edge of the external side surface on an inner periphery side being joined to the sealing side surface,
**characterized in that** the method comprises allowing the sealing side surface to either extend so as to be parallel to a surface orthogonal to the axis or extend slantingly to the external side relative to the surface orthogonal to the axis when the sealing apparatus is fitted to the through-hole and the seal lip is put into contact with the shaft or when a lubricant inside the object to which the sealing apparatus is attached presses the seal lip in contact with the shaft in a state in which the sealing apparatus is used for the object.

## Amended claims

### Amended claims under Art. 19.1 PCT

1. (Currently amended) A sealing apparatus for sealing between a through-hole and a shaft that is inserted through the through-hole and that rotates in both directions in an object to which the sealing apparatus is attached, **characterized in that** the sealing apparatus comprises:
a reinforcing ring formed annularly around an axis;
an elastic body part formed from an elastic body that is attached to the reinforcing ring and that is formed annularly around the axis, the elastic body part including an annular seal lip that extends along the axis and that is in contact with the shaft such that the shaft is slidable; and
a garter spring to press the seal lip in a direction toward the axis,
wherein the seal lip has a sealing side surface that is a surface facing a target to be sealed side and being formed annularly around the axis and an external side surface that is a surface facing an external side opposite the target to be sealed side and being formed annularly around the axis, an edge of the external side surface on an inner periphery side being joined to the sealing side surface, and
wherein the sealing side surface is formed in such a way as to extend from the edge of the external side surface on the inner periphery side slantingly to the external side relative to the surface orthogonal to the axis when the seal lip is in contact with the shaft in a state in which the sealing apparatus is attached to the object or when a lubricant inside the object to which the sealing apparatus is attached presses the seal lip in contact with the shaft in a state in which the sealing apparatus is used for the object.

2. (Currently amended) The sealing apparatus according to claim 1, **characterized in that** in a free state, the sealing side surface extends from the edge of the external side surface on the inner periphery side so as to be parallel to the surface orthogonal to the axis or slantingly to the external side relative to the surface orthogonal to the axis.

3. (Currently amended) The sealing apparatus according to claim 1, **characterized in that** in a free state, the sealing side surface extends from the edge of the external side surface on the inner periphery side slantingly to the target to be sealed side relative to the surface orthogonal to the axis.

4. (Currently amended) The sealing apparatus according to claim 3, **characterized in that** the sealing side surface forms an angle greater than or equal to 60° and less than 90° with the surface orthogonal to the axis.

5. The sealing apparatus according to claim 2, **characterized in that** the sealing side surface is a flat surface or a surface that increases in diameter as progress from the target to be sealed side toward the external side.

6. The sealing apparatus according to either claim 3 or 4, **characterized in that** the sealing side surface is a surface that increases in diameter as progress from the external side toward the target to be sealed side.

7. (Currently amended) The sealing apparatus according to any one of claims 1 to 6, **characterized in that** the seal lip has an accommodating groove that is an annular groove recessed to the inner periphery side and that is at a position facing away from the sealing side surface and the external side surface, and the garter spring is housed in the accommodating groove.

8. (Currently amended) A method of sealing a sealed component using a sealing apparatus for sealing between a through-hole and a shaft that is inserted through the through-hole and that rotates in both directions in an object to which the sealing apparatus is attached, the sealing apparatus comprising:
a reinforcing ring formed annularly around an axis;
an elastic body part formed from an elastic body that is attached to the reinforcing ring and that is formed annularly around the axis, the elastic body part including an annular seal lip that extends along the axis and that is in contact with the shaft such that the shaft is slidable; and
a garter spring to press the seal lip in a direction toward the axis, the seal lip having a sealing side surface that is a surface facing a target to be sealed side and being formed annularly around the axis and an external side surface that is a surface facing an external side opposite the target to be sealed side and being formed annularly around the axis, an edge of the external side surface on an inner periphery side being joined to the sealing side surface,
**characterized in that** the method comprises allowing the sealing side surface to extend from the edge of the external side surface on the inner periphery side slantingly to the external side relative to the surface orthogonal to the axis when the sealing apparatus is fitted to the through-hole and the seal lip is put into contact with the shaft or when a lubricant inside the object to which the sealing apparatus is attached presses the seal lip in contact with the shaft in a state in which the sealing apparatus is used for the object.

Statement under Art. 19.1 PCT
1.
- The descriptions of "garter spring" in claims 1, 8 are based on paragraph [0024] of the original description, the original claim 7 and etc.
- The amendment of "seal-side surface" in claim 1 is based on paragraphs [0033], [0036], [0045], [0046], [0050], [0051] of the original description, the original Figs 3 to 5, 7, 10 and etc.
- The amendment of "seal-side surface" in claim 2 is based on paragraphs [0025], [0039] of the original description, the original Figs 2, 5 and etc.
- The amendments of "seal-side surface" in claims 3, 4 are based on paragraphs [0041] to [0045] of the original description, the original Figs 6, 7 and etc.
- The amendment in claim 7 corresponds to the amendment of "garter spring" in claim 1.
- The inventions according to the claims and the features thereof have become clear by the amendments.
